# FASCICULE DE BREVET EUROPEEN

(11) **EP 3 073 335 B1**
(45) Date de publication et mention de la délivrance du brevet: **18.08.2021**
(21) Numéro de dépôt: 16161662.8
(22) Date de dépôt: 22.03.2016
(51) Int. Cl.: G05B 15/02, G06F 3/048, H04L 12/28

(54) **PROCÉDÉ DE COMMANDE D'UNE INSTALLATION DOMOTIQUE D'UN BÂTIMENT ET DISPOSITIF DE COMMANDE ASSOCIÉ**
VERFAHREN ZUR STEUERUNG EINER HAUSANLAGE EINES GEBÄUDES, UND ENTSPRECHENDE STEUERVORRICHTUNG
METHOD FOR CONTROLLING A HOME-AUTOMATION FACILITY OF A BUILDING AND ASSOCIATED CONTROL DEVICE

(30) Priorité: 24.03.2015 FR 1552421
(43) Date de publication de la demande: 28.09.2016
(73) Titulaire: SOMFY ACTIVITES SA, 74300 Cluses (FR)
(72) Inventeur: DEVIS, Frédéric, 74330 Epagny (FR)
(74) Mandataire: Novaimo

(56) Documents cités:
- EP-A1- 2 482 150
- WO-A1-2011/098465
- US-A1- 2011 144 773
- US-A1- 2013 191 755
- None

## Description

La présente invention concerne un procédé de commande d'une installation domotique d'un bâtiment, et un dispositif de commande d'une installation domotique d'un bâtiment.

De manière générale, la présente invention concerne le domaine des installations domotiques. Une installation domotique est généralement conçue pour mettre en fonctionnement des équipements domotiques, tels que par exemple des dispositifs d'occultation comprenant un dispositif d'entraînement motorisé mettant en mouvement un écran entre au moins une première position et une deuxième position, des dispositifs d'éclairage, des dispositifs de chauffage et/ou un dispositif de sécurité anti-intrusion, au travers de données recueillies par des capteurs, tels que par exemple des capteurs de température, de luminosité, de vent, d'humidité, de présence, d'ouverture et/ou de fumée.

Le dispositif d'entraînement motorisé des dispositifs d'occultation comprend un actionneur électromécanique d'un élément mobile de fermeture, d'occultation ou de protection solaire tel qu'un volet, une porte, une grille, un store, ou tout autre matériel équivalent. De manière générale, l'équipement domotique correspond à une charge électrique dont l'état peut être piloté grâce à une unité de commande faisant partie de l'équipement.

L'installation domotique comprend également un dispositif de commande. Le dispositif de commande comprend une unité de commande centrale et des unités de commande locales, les unités de commande locales étant associées respectivement à un ou quelques uns des équipements domotiques de l'installation, et permettant d'émettre des ordres de commandes simples de changement d'état. L'unité de commande centrale est un module de commande central communiquant, en liaison filaire ou sans fil, avec les unités de commande des équipements domotiques de sorte à contrôler à distance les équipements domotiques de l'installation domotique. L'unité de commande centrale communique de préférence également avec un serveur externe. Les équipements domotiques correspondent ainsi à des charges électriques pouvant être commandées à distance. Les capteurs précités peuvent également être considérés comme des équipements domotiques, au même titre que les dispositifs de commande.

Le dispositif de commande comprend également un dispositif d'entrée de données et un dispositif d'affichage. Le dispositif de commande, notamment l'unité de commande centrale, est par exemple un téléphone intelligent (en anglais smartphone) ou une tablette tactile permettant notamment de saisir des données d'entrée pour mettre en fonctionnement les équipements domotiques et d'afficher un état de fonctionnement de ces équipements domotiques.

On connaît déjà des dispositifs de commande d'une installation domotique ayant un écran de représentation graphique des équipements domotiques du bâtiment, notamment sous forme d'icônes représentatives des équipements. Le dispositif de commande est configuré pour contrôler le fonctionnement des équipements domotiques.

On connaît par ailleurs du brevet FR2912821 un outil de configuration dont l'utilisation, en locale ou de manière connectée à un réseau externe, comme le réseau Internet, permet de simplifier la configuration de l'installation et la mise en relation des différents équipements entre eux. Cet outil de configuration est toutefois destiné à un installateur et ne permet pas à un utilisateur de l'installation de mieux appréhender son installation et les différents équipements domotiques qui le composent, y compris lorsque ceux-ci ne sont plus visibles après installation, notamment pour permettre leur maintenance ou modifier les réglages.

On connaît enfin du document US2013/0191755A1 un procédé de configuration d'un nouveau dispositif domotique externe à une installation existante et à intégrer dans cette installation. Dans le système utilisé pour mettre en œuvre ce procédé, on utilise un outil de configuration. Cet outil ne permet pas de contrôler un dispositif de l'installation. Cet outil est par ailleurs distinct l'installation domotique et n'en fait pas partie. En effet, l'outil est un outil d'installation qui appartient à un installateur ou à un revendeur. L'installation comprend également un dispositif de contrôle ne présentant aucun moyen d'affichage d'une notice d'utilisation d'un autre équipement de l'installation. Contrairement à la problématique de la présente invention, ce document a pour but de faciliter l'installation et l'intégration dans une installation d'un nouveau dispositif domotique externe à cette installation. Si l'outil de configuration utilise une information de type d'un dispositif domotique, cette information est nullement utilisée par un dispositif de contrôle de l'installation, et a *fortiori* pas utilisée pour l'affichage, par ce dispositif de contrôle, d'une notice d'utilisation.

La présente invention a pour but de résoudre les inconvénients précités et de proposer un procédé de commande d'une installation domotique équipant un bâtiment et l'environnement de ce bâtiment, et un dispositif de commande associé, permettant de simplifier la maintenance de l'installation et de fournir une aide au diagnostic, pour un installateur comme pour un utilisateur de l'installation.

A cet effet, la présente invention concerne un procédé de commande d'une installation domotique d'un bâtiment, tel que défini dans la revendication 1, l'installation domotique comprenant une pluralité d'équipements domotiques et de capteurs placés dans des zones de vie à l'intérieur et à l'extérieur du bâtiment et un dispositif de commande. Le dispositif de commande comprend un dispositif d'entrée de données et un dispositif d'affichage, le dispositif d'affichage ayant un écran de représentation graphique. Le dispositif de commande est configuré pour contrôler le fonctionnement des équipements domotiques et/ou pour communiquer avec les capteurs. Le procédé comprend au moins les étapes suivantes :
- récupération d'au moins une information de type associée à un premier équipement domotique,
- sur demande, notamment sur demande d'un utilisateur, affichage des caractéristiques de type du premier équipement domotique et d'une interface de liaison vers une notice d'utilisation associée au type du premier équipement domotique,
- sur activation de l'interface de liaison, notamment sur activation via une action de l'utilisateur, affichage de la notice d'utilisation associée.

Ainsi, le procédé de commande d'une installation domotique d'un bâtiment et de l'environnement du bâtiment permet de simplifier la maintenance de l'installation et le diagnostic des dysfonctionnements.

Le procédé de commande de l'installation domotique est donc simple et rapide à mettre en œuvre.

Le dispositif de commande est de préférence configuré pour contrôler le fonctionnement des équipements domotiques par émission d'ordres de commandes de changement d'état. Ces ordres sont avantageusement de type binaire ou de type « toggle », par exemple ouvert/fermé, éteint/allumé, sous tension/hors tension, on/off, en marche/en veille.

Avantageusement, la récupération d'au moins une information de type associée au premier équipement domotique est une information de type associée à un premier équipement domotique installé de la pluralité des équipements domotiques installés dans l'installation domotique.

L'étape de récupération de l'information de type peut être réalisée au cours d'une phase de mise en place de l'installation domotique.

L'étape de récupération de l'au moins une information de type comprend une communication de cette information par le premier équipement domotique.

L'étape d'affichage des caractéristiques de type et de l'interface de liaison peut être mise en œuvre lors de l'activation d'un menu d'aide au diagnostic.

L'étape d'affichage des caractéristiques de type et de l'interface de liaison fait suite à une sélection du premier équipement domotique et à l'activation d'un menu d'aide au diagnostic.

Le menu d'aide au diagnostic n'est affiché que lorsqu'un équipement domotique ou un type d'équipement domotique est sélectionné.

Le dispositif de commande peut être en lien avec une base de données au travers d'un réseau Internet ou d'un réseau local LAN.

La notice d'utilisation peut comprendre des instructions écrites et lisibles par un utilisateur, permettant à l'utilisateur de configurer lui-même le premier équipement domotique ou les liens entre le premier équipement domotique et une unité de commande locale ou un capteur.

Les caractéristiques de type peuvent comprendre un nom commercial et/ou un numéro de version et/ou une date de version.

En outre, un tel enchaînement d'étapes permet de faciliter la supervision et la maintenance de l'installation domotique sans surcharger l'interface graphique du dispositif de commande. Une telle interface graphique permet une utilisation rapide et intuitive de l'installation domotique.

L'invention porte aussi sur un dispositif de commande d'une installation domotique d'un bâtiment, tel que défini dans la revendication 8, ledit dispositif de commande comprenant un dispositif d'entrée de données et un dispositif d'affichage. Le dispositif d'affichage a un écran de représentation graphique des zones de vie du bâtiment. Le dispositif de commande comprend des éléments matériels et/ou logiciels de mise en œuvre du procédé de commande défini précédemment, notamment un élément de sélection d'une première icône symbolisant un premier équipement domotique, un élément d'activation d'un menu d'aide au diagnostic et un élément d'affichage d'une notice d'utilisation associée à au premier équipement domotique dont l'icône est sélectionnée.

Le dispositif de commande peut comprendre une unité de commande centrale, celle-ci comprenant le dispositif d'entrée de données et le dispositif d'affichage.

Ce dispositif de commande présente des caractéristiques et avantages analogues à ceux décrits précédemment en relation avec le procédé de commande selon l'invention.

L'invention porte aussi sur une installation domotique comprenant un dispositif de commande défini précédemment et plusieurs équipements capables de fournir des informations concernant leur type.

L'invention porte aussi sur un support d'enregistrement de données, lisible par un calculateur, sur lequel est enregistré un programme informatique comprenant des éléments de codes de programme informatique de mise en œuvre des étapes du procédé de commande défini précédemment.

L'invention porte encore sur un programme informatique comprenant un élément de code de programme informatique adapté à la réalisation des étapes du procédé de commande défini précédemment, lorsque le programme tourne sur un ordinateur.

D'autres particularités et avantages de l'invention apparaîtront encore dans la description ci-après en référence aux dessins annexés, donnés à titre d'exemples non limitatifs :
- la figure 1 est une vue schématique d'une installation domotique conforme à un mode de réalisation de l'invention ;
- la figure 2 est une première vue schématique d'une interface graphique d'un dispositif de commande conforme à un mode de réalisation de l'invention ;
- la figure 3 est une deuxième vue schématique d'une interface graphique d'un dispositif de commande conforme à un mode de réalisation de l'invention ;
- la figure 4 est un algorithme d'un procédé de commande d'une installation domotique d'un bâtiment conforme à un mode de réalisation de l'invention.

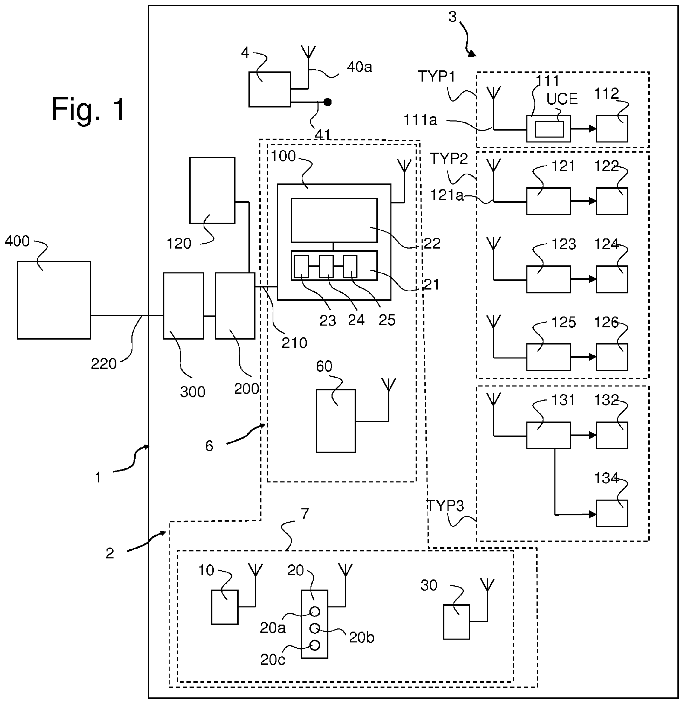

On va décrire tout d'abord, en référence à la figure 1, une installation domotique conforme à un mode de réalisation de l'invention.

La figure 1 représente une installation domotique 1 comprenant un dispositif de commande 2 et plusieurs équipements domotiques 3 de types différents.

Les équipements domotiques comprennent des actionneurs et des charges électriques sur lesquels les actionneurs agissent pour les déplacer ou pour les activer. Les actionneurs comprennent une unité électronique de commande UCE, leur permettant de commander électriquement la charge associée. Ils comprennent également des moyens d'émission et/ou de réception d'ordres par voie hertzienne, représentés par une antenne, comme par exemple les antennes 111a, 121a. Alternativement, les ordres peuvent être transmis par d'autres moyens de communication, tels que courants porteurs ou liaisons de type infrarouge. Les moyens d'émission et/ou de réception d'ordres peuvent faire partie de l'unité de commande électronique UCE. L'installation comprend également un ou plusieurs capteurs 4 munis de moyens d'émission et/ou de réception d'ordres 40a et d'un moyen de mesure 41. L'installation 1 comprend également des unités de commande centrales 6 ou locales 7 munies de moyens d'émission et/ou de réception d'ordres.

Pour simplifier la figure une seule unité électronique de commande est représentée sur la figure 1, mais il faut comprendre que chaque équipement domotique comprend sa propre unité électronique de commande UCE.

Le premier équipement d'un premier type TYP1 est par exemple un actionneur de store 111 entraînant un store de terrasse 112. Il peut-être commandé par une première unité de commande locale 10. Les deuxièmes équipements d'un deuxième type TYP2 sont par exemple des actionneurs pour volets roulants 121, 123 et 125 entraînant respectivement les volets 122, 124 et 126. Ils peuvent être commandés respectivement par une deuxième unité de commande locale 20. Cette deuxième unité de commande locale peut prévoir un ensemble de touches 20a, 20b et 20c, chaque touche étant dédiée à la commande d'un équipement 121, 123 et 125. Le troisième équipement d'un troisième type TYP3 comprend par exemple une centrale d'alarme anti-intrusion 131 raccordée à des sirènes 132 et 134. Il peut être commandé respectivement par une troisième unité de commande locale 30. D'autres types d'équipements peuvent être présents dans une telle installation, à titre d'exemples : actionneurs de portail, de verrouillage, de ventilation naturelle, d'éclairage, de chauffage-climatisation etc. Tous les équipements de premier type TYP1, de deuxième type TYP2, et de troisième type TYP3 sont regroupés par des encadrés en pointillés.

Le capteur 4 mesure une grandeur physique et envoie à un ou plusieurs des récepteurs de l'installation des données, en particulier soit à une unité de commande locale 7 soit à l'unité de commande centrale 6, soit à un des équipements domotiques, une information relative aux données mesurées : soit une information de type binaire pour signaler un état de fonctionnement, par exemple dans le cas où la mesure est inférieure ou supérieure à un seuil prédéterminé, ou encore de type numérique pour indiquer la valeur mesurée. Les capteurs 4 peuvent par exemple être des capteurs de température, de temps (horloges), de luminosité, de vent, d'humidité, de mouvement et/ou de fumée

L'installation domotique 1 comprend également un dispositif de commande 2 comprenant les unités de commande locales 7 et un dispositif de commande centrale 6, sous forme d'un dispositif de commande nomade 60, tel qu'un assistant digital personnel (PDA), une tablette tactile ou encore un téléphone intelligent, et/ou d'un dispositif de commande fixe 100 tel qu'un panneau mural ou un ordinateur de bureau. Tous les équipements, le dispositif de commande nomade, le dispositif de commande fixe, les unités de commandes locales et les capteurs, communiquent entre eux par utilisation d'un même protocole radiofréquences, par exemple le protocole io-homecontrol (marque déposée). Un symbole d'antenne représente ce moyen de communication commun. Alternativement, plusieurs protocoles peuvent être utilisés, avec passerelles de communication ou avec dispositifs supportant plusieurs protocoles.

Le dispositif de commande centrale 6 peut piloter les unités de commande locales 7 ou directement les équipements domotiques au travers de leur unité électronique de commande. Le dispositif de commande centrale 6 communique, en liaison filaire ou sans fil, avec les unités de commande locales 7 et/ou les équipements de sorte à contrôler les équipements domotiques 3 de l'installation domotique 1. Les unités de commande locales 7 sont associées respectivement à chacun des équipements domotiques 3 de l'installation domotique 1. Les équipements domotiques 3 correspondent ainsi à des charges électriques pouvant être commandées à distance.

Les moyens d'émission et/ou de réception d'ordres de chaque unité électronique de commande UCE sont configurés pour échanger des données avec l'unité de commande centrale 6 et/ou l'unité de commande locale 7 avec laquelle l'équipement domotique est associée et/ou le capteur 4. L'échange de données comprend l'émission et/ou la réception de données. Chaque unité de commande comprend par ailleurs des éléments de commande, par exemple un microcontrôleur, de sorte à pouvoir effectuer des calculs et stocker des données et des éléments de pilotage de la charge électrique associée, telles que des sorties du microcontrôleur ou des relais pour permettre de gérer différents états ou mouvements de la charge électrique.

L'unité de commande centrale 6 et les unités de commande locales 7 comprennent également des éléments de commande, par exemple un microcontrôleur, de sorte à pouvoir effectuer des calculs et stocker des données, de même que le capteur 4.

L'unité de commande centrale 6 et les unités de commande locales 7 comprennent ainsi notamment au moins un dispositif de mémorisation de données de sorte d'une part à configurer le dispositif de commande 2 en fonction des données d'entrée saisies par l'utilisateur au travers du dispositif d'entrée de données 21, comme décrit précédemment, et d'autre part à commander en fonctionnement le dispositif de commande 2, et en particulier les équipements 3 et éventuellement les capteurs 4.

L'unité de commande centrale 6 et les unités de commande locales 7 sont en communication avec les équipements domotiques 3 de l'installation domotique 1 au travers de leurs moyens d'émission et/ou de réception, en liaison filaire ou sans fil. Les communications peuvent être de type monodirectionnel ou bidirectionnel.

L'unité de commande centrale est en lien avec un module de communication 200 par une première liaison 210 de type radio fréquence, utilisant notamment le même protocole de communication qu'entre l'unité de commande centrale et les équipements. Le module de communication sert notamment de serveur local. Le module de communication 200 est raccordé au monde extérieur à l'installation 1, et en particulier à un serveur externe 400, au travers d'un module passerelle 300, par une liaison haut-débit 220. Cette liaison haut-débit est de type filaire, par exemple de type Ethernet, ou de type radiofréquences, par exemple Wi-Fi.

De préférence, l'unité de commande centrale 6 est connectée à un réseau distant, par exemple un réseau internet.

Un ordinateur personnel 120 ou un téléviseur peut être connecté à l'installation domotique.

L'unité de commande centrale comprend un dispositif d'affichage 22, par exemple sous la forme d'un écran de commande, préférentiellement de type tactile, et un dispositif d'entrée de données 21 permettant d'assurer la gestion de l'écran, comprenant d'autres moyens d'interface homme-machine tels que clavier de commande, buzzer, haut-parleur, voyants, et des moyens de traitement, notamment un calculateur 27 et une mémoire 26, pour la commande des équipements et de communication radio, comme décrits dans l'art antérieur. Ainsi, l'unité de commande centrale permet notamment de saisir des données d'entrée pour mettre en fonctionnement les équipements domotiques 3 et d'afficher un état de fonctionnement de ces équipements domotiques 3. L'écran tactile peut intégrer le dispositif d'entrée de données, notamment un élément de sélection, un élément de navigation et un élément de validation.

Le dispositif d'entrée de données comprend un élément de sélection 23, un élément de positionnement ou de navigation 24 et un élément de validation 25. Le dispositif d'affichage comprend des éléments d'affichage 221, 222.

Dans un mode de réalisation, l'élément de sélection, l'élément de positionnement et l'élément d'affichage sont réalisés au moyen d'un écran tactile 10.

Bien entendu, le mode de réalisation des éléments de sélection, de positionnement et d'affichage n'est nullement limitatif et peut être différent, en particulier réalisé au moyen de boutons poussoirs ou de touches sensitives pour l'élément de sélection et l'élément de positionnement, et d'un afficheur LCD (acronyme du terme anglo-saxon « Liquid Crystal Display ») ou TFT (acronyme du terme anglo-saxon « Thin Film Transistor ») pour l'élément d'affichage.

Par exemple le dispositif d'affichage 22 peut être physiquement séparé d'un module de commande qui comprendrait tout ou partie du dispositif d'entrée de données 21. L'écran de commande peut être remplacé par celui de l'ordinateur personnel 120. Les ressources informatiques permettant le fonctionnement du dispositif de commande 2 sont préférentiellement implantées dans ce dernier, mais il est également possible d'en distribuer tout ou partie dans l'ordinateur personnel 120 ou dans l'unité de commande fixe ou nomade ou encore dans le serveur internet 400, notamment quand il s'agit de bases de données relatives à la configuration et à la commande de l'installation.

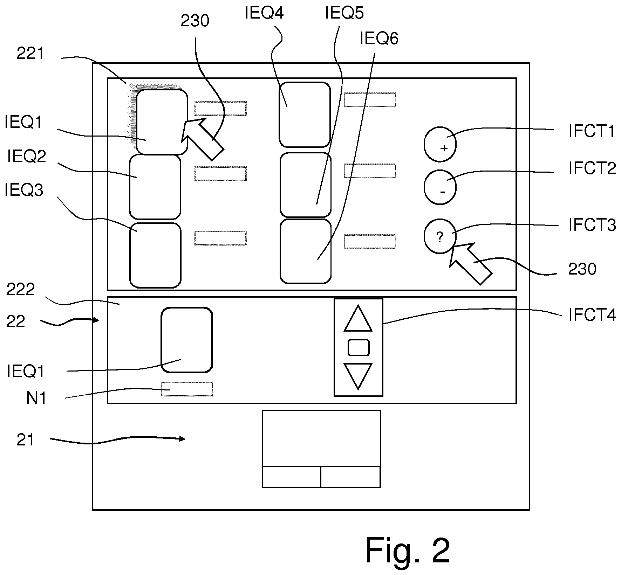

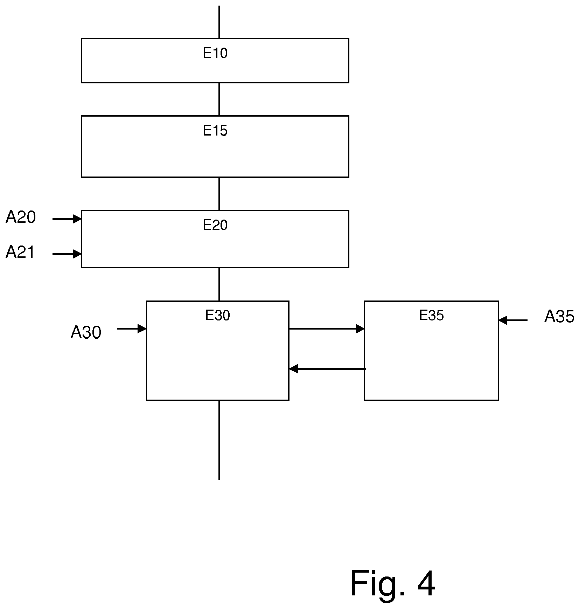

On va décrire à présent, en référence aux figures 2 à 4, un mode d'exécution d'un procédé de commande d'une installation domotique d'un bâtiment conforme à un mode de réalisation de l'invention.

Dans ce mode d'exécution, le procédé de commande 2 d'une installation domotique 1 d'un bâtiment comprend une étape E10 de récupération d'au moins une information de type associée à un équipement 3 appartenant à l'installation domotique1, c'est-à-dire une information du type de l'équipement. Une information du type de l'équipement correspond à une information non unique et partagée avec les autres équipements de même type, ayant des caractéristiques techniques identiques. Cette étape E10 est répétée pour l'ensemble des équipements appartenant à l'installation domotique 1. Au cours de cette étape E10, les équipements peuvent fournir d'eux-mêmes l'information au dispositif de commande 2, notamment lors d'une phase de configuration ou d'installation. Alternativement, la fourniture de l'information de type peut être réalisée sur requête du dispositif de commande. Ces dispositions sont rendues possibles par le fait que les équipements comprennent des moyens de communication bidirectionnels. Selon une deuxième variante, cette étape est réalisée par un installateur qui saisit manuellement les données en utilisant l'élément de saisie de données 21 du dispositif de commande 2.

L'au moins une information de type peut être accompagnée par d'autres informations caractérisant plus précisément l'équipement, par exemple une référence de nom commercial d'actionneur associé à l'équipement, une référence de version de logiciel et/ou une référence de version de matériel, sous forme d'un numéro de version ou d'une date de version.

Lorsque les équipements appartenant à l'installation ont été identifiés, leur affichage sur le dispositif d'affichage au cours d'une étape E15, comprend une icône IEQ1, IEQ2, IEQ3, IEQ4, IEQ5, IEQ6, représentative de l"équipement et de son type, ainsi qu'un nom N1, N2, N3, N4, N5, N6, désignant l'équipement. Ce nom peut être générique, à savoir qu'il est déterminé de manière mathématique dans l'ordre des équipements identifiés et selon les informations de type et/ou d'autres informations fournies lors de l'installation de ces équipements. Par exemple, le nom peut être construit par concaténation de la désignation du type de l'équipement et d'un numéro d'ordre. Il peut être modifié à la convenance de l'utilisateur. Cette étape E15 peut intervenir temporellement avant ou après l'étape E10. Dans le cas où l'étape E15 d'affichage des icônes d'équipement intervient avant de connaître l'information de type, une icône générique est créée et affichée pour désigner l'équipement, ne donnant donc aucune information sur le type d'équipement. Cette icône peut alors être remise à jour dès que l'information de type pour cet équipement est récupérée.

De manière avantageuse, l'étape de récupération de l'information de type est réalisée de manière automatique au cours d'une phase de mise en place de l'installation domotique par un installateur. Cette étape peut être répétée régulièrement, par exemple au bout d'un certain nombre de cycles d'ouverture-fermeture d'un volet roulant, ou après un certain nombre de tentatives infructueuses pour modifier l'état d'un équipement, de manière à assurer que les informations récupérées lors de l'étape E10 correspondent bien aux équipements en place dans l'installation.

Le procédé comprend ensuite une première étape d'affichage E20 au cours de laquelle, sur demande, notamment sur demande d'un utilisateur, des caractéristiques de type d'équipement sont affichés, ainsi qu'une interface de liaison vers une notice d'utilisation relative au type de l'équipement. L'exécution de cette étape est donc déclenchée par la demande, soit suite à la demande. Le fait que l'information de type soit accompagnée par d'autres informations caractérisant plus précisément l'équipement, par exemple une référence de nom commercial d'actionneur associé à l'équipement, une référence de version de logiciel et/ou une référence de version de matériel, sous forme d'un numéro de version ou d'une date de version, permet d'assurer de manière fiable que la notice d'utilisation corresponde exactement à celle souhaitée par un utilisateur ou un installateur.

Le terme « sur demande » de l'étape E20 sont expliqués ci-après. Cette étape E20 peut être mise en œuvre suite à la sélection, par un utilisateur en interaction avec l'élément de saisie de données 21 et/ou l'élément d'affichage 22 du dispositif de commande, d'une icône d'équipement dans une liste d'icônes d'équipements et l'activation d'un menu d'aide au diagnostic, notamment par sélection à l'aide de l'élément de sélection 23 d'une icône d'aide, par exemple représentée graphiquement par un point d'interrogation sur un fond circulaire. De manière avantageuse, l'icône d'aide permettant l'activation du menu d'aide au diagnostic n'est présente sur l'élément d'affichage 22 que lorsqu'un équipement individuel est sélectionné. En dehors de ce cas, l'icône d'aide n'est par exemple pas présente ou masquée, ou rendue moins apparente, par exemple sous intensifiée. Alternativement, l'icône d'aide est présente mais a une signification différente, par exemple permet l'activation d'un menu autre que le menu d'aide au diagnostic. Ainsi, l'étape E20 requiert l'ensemble de deux actions qui sont la sélection A20 d'un équipement individuel et la sélection et l'activation A21 du menu d'aide au diagnostique par sélection de l'icône d'aide, mises en œuvre par l'utilisateur. Ainsi, l'interface de liaison affichée pointe vers la notice d'utilisation associée au type d'équipement sélectionné.

La figure 2 illustre de manière graphique l'interface mise à disposition de l'utilisateur lors de l'étape E20. Plusieurs icônes d'équipements IEQ1, IEQ2, IEQ3, IEQ4, IEQ5, IEQ5 sont visibles sur une partie 221 de l'élément d'affichage 22 du dispositif de commande 2. Des icônes de fonctions IFCT1, IFCT2, IFCT3 représentent diverses fonctions activables depuis l'interface. Par exemple, l'icône de fonction IFCT1 représente une fonction d'ajout d'un équipement dans la liste, l'icône IFCT2, une fonction de suppression d'un équipement dans la liste. La troisième icône de fonction IFCT3 est l'icône d'aide, dont la sélection permet l'activation d'un menu d'aide au diagnostic. Une première flèche 230 représente l'élément de sélection positionné au dessus d'une icône d'équipement IEQ1, correspondant par exemple au volet roulant motorisé 111, 112 de premier type. Une deuxième flèche 230 représente l'élément de sélection au dessus de l'icône d'aide IFCT3.

L'activation A20 de l'icône d'équipement IEQ1 par l'élément de sélection a créé dans une deuxième partie de l'élément d'affichage 22 une interface de commande de l'équipement sélectionné IEQ1. L'icône IEQ1 est donc reprise dans cette deuxième partie d'écran, ainsi que le nom associé N1. Une quatrième icône de fonction IFCT4 est également représentée, ici avec une représentation de touches de commandes permettant de commander l'émission de commandes d'ouverture, fermeture ou d'arrêt du volet roulant 112.

La figure 2 illustre également le dispositif d'entrée de données 21, par exemple sous forme d'une dalle tactile et de touches.

La sélection de l'icône d'aide IFCT3 et son activation correspondent à une action A21.

Les actions A20 et A21 de l'étape E20 peuvent être réalisées par déplacement d'un curseur ou pointeur de l'élément de sélection et par positionnement du curseur ou pointeur sur l'icône d'équipement et/ou l'icône d'aide. Dans le cas de l'utilisation d'un écran tactile, la sélection peut être réalisée par pression d'un doigt de l'utilisateur sur l'écran au niveau de l'icône d'équipement ou de l'icône d'aide à sélectionner. Dans ce cas, l'écran tactile constitue l'élément de sélection.

Les actions A20 et A21 de l'étape E20 sont mises en œuvre par l'utilisateur.

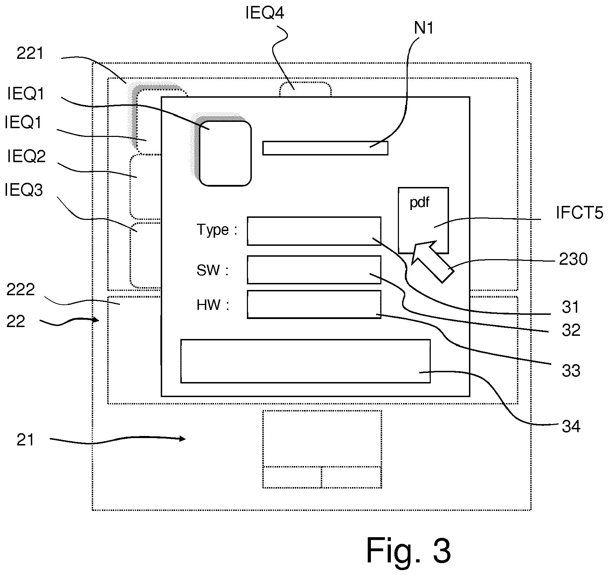

La figure 3 illustre le résultat obtenu à l'issue de l'étape E20. Une zone d'affichage s'est superposée à l'interface précédente. Toute autre forme d'affichage peut être mise en œuvre. Sur cette zone d'affichage sont repris l'icône d'équipement IEQ1 et son nom N1. Différentes zones de texte 31, 32, 33 reprennent respectivement des informations de type, de référence de version de logiciel et de référence de version de matériel, ces informations étant issues de l'étape E10. Une quatrième zone 34 correspond à une zone de texte libre ou zone de commentaires, dans laquelle l'installateur et/ou l'utilisateur peut inscrire des données personnelles, relatives à l'équipement considéré. Cette zone de commentaires peut avoir été remplie par l'installateur lors de la configuration de l'installation ou par l'utilisateur lui-même à partir des informations recueillies dans la notice d'utilisation ou à partir des connaissances qu'il a acquises.

Une icône de fonction IFCT5 représente l'interface de liaison vers une notice d'utilisation correspondant aux informations de type, de version de logiciel et de version de matériel correspondant à l'équipement sélectionné IEQ1. Une flèche 230 représente l'élément de sélection au dessus de l'icône IFCT5 représentant l'interface de liaison.

Le procédé de commande comprend ensuite une seconde étape d'affichage E30 d'une notice d'utilisation associée à l'équipement sélectionné au cours de l'étape E20. Pratiquement, l'étape d'affichage E30 est mise en œuvre sur activation de l'interface de liaison, notamment sur activation via une action de l'utilisateur, soit suite à une action A30 de sélection et d'activation de l'interface de liaison, notamment de l'icône IFCT5 relative à la notice associée, à l'aide de l'élément de sélection 23. Cette notice d'utilisation est de préférence un document écrit, comprenant des instructions écrites et lisibles par l'utilisateur, lui permettant de comprendre comment configurer l'équipement 3 ou comment configurer ses liens avec le dispositif de commande 2 ou un capteur 4. La notice d'utilisation est préférablement stockée sur un serveur externe 60 et non au niveau du dispositif de commande. Ainsi, lors de l'action A30 sur l'icône relative à la notice associée, une étape E35 de requête et de récupération du document correspondant à la notice d'utilisation est mise en œuvre par le dispositif de commande. Celui-ci est en effet relié par des moyens appropriés, par exemple au travers d'un réseau Internet ou d'un réseau local LAN (pour Local Area Network), au serveur externe 60. Cette étape E35 permet de créer un accès au document sans devoir augmenter les ressources mémoires du dispositif de commande, notamment du fait que les types d'équipements présents dans de telles installations domotiques peuvent être très variés, du fait d'une grande variété de fonctionnalités mais également du fait de l'historique des produits référencés sur le marché. Cette étape facilite également la mise à jour des informations accessibles aux utilisateurs et l'adéquation entre les notices d'utilisations et les produits installés.

De préférence, le document de notice récupéré est dans la langue configurée par l'installateur au niveau de l'installation. Si ce document n'existe pas où si aucune préférence de langue n'a été indiquée pour l'installation, la notice récupérée est une version par défaut, par exemple une notice multilingue.

L'étape E30 comprend ainsi l'ouverture d'une nouvelle zone graphique affichant le contenu du document de notice d'utilisation. L'ouverture de ce document peut être conjointe à l'ouverture d'un logiciel de lecture de documents, par exemple le logiciel libre Adobe® Reader®, permettant la consultation de documents sous un format pdf, ou liée à l'exécution d'une étape de conversion d'une version informatique en version lisible par un utilisateur (par exemple ouverture d'une page web).

Le procédé de commande d'une installation domotique 1 d'un bâtiment permet ainsi de simplifier la récupération des données associées à un équipement particulier, à la fois pour l'utilisateur, qui n'a pas à rechercher lui-même en utilisant des moteurs de recherche, quelle est la notice qui correspond exactement à l'équipement installé ainsi qu'au niveau du dispositif de commande, lequel associe de manière univoque une notice à une référence d'un type d'équipement.

En outre, une telle représentation graphique et succession d'étapes permet de faciliter la supervision de l'installation domotique 1 et le pilotage des équipements domotiques 3, en particulier d'améliorer l'ergonomie de l'interface graphique du dispositif de commande 2 et la maintenance de l'installation. Une telle interface graphique permet une utilisation rapide et intuitive de l'installation domotique 1.

Bien entendu, plusieurs équipements domotiques 3 de même type, par exemple deux volets roulants motorisés, peuvent présenter des différences de référence, alors même qu'ils partagent le même type. La notice d'utilisation affichée au cours de l'étape E30 sera celle adaptée à la référence de l'équipement, notamment celle correspondant à l'information ou aux informations caractéristiques au moins du type d'équipement et récupérées lors de l'étape E10. En l'absence d'information sur une référence de version, un affichage intermédiaire pourrait fournir des liens vers différentes notices possibles concernant le type de produit. En l'absence d'information de type et de référence, la notice d'utilisation pourrait être remplacée par un document générique ou un lien vers une page web indiquant notamment les coordonnées d'installateurs susceptibles de diagnostiquer les dysfonctionnements de l'installation.

Le procédé peut être répété selon le souhait de l'utilisateur pour les différents équipements de l'installation. Il s'applique également dans le cas où les équipements domotiques sont les dispositifs de commande ou les capteurs eux-mêmes, dans la mesure où ceux-ci sont capables de fournir au moins les informations relatives à leur type et sont sélectionnables dans une liste d'équipements domotiques affichée par les éléments d'affichage d'un dispositif de commande.

Les éléments de commande du dispositif de commande 2 comprennent des éléments matériels et/ou logiciels de mise en œuvre des étapes du procédé.

Le dispositif de commande 2 comprend tous les éléments matériels et/ou logiciels de mise en œuvre du procédé de commande objet de l'invention. Les éléments matériels et/ou logiciels comprennent tout ou partie des éléments suivants :
- un élément 200, 210, 220, 300 de récupération d'au moins une information de type associée à un premier équipement domotique,
- un élément 22, 23, 24, 25 de détection d'une demande d'affichage, notamment de détection d'une demande d'affichage par un utilisateur,
- un élément d'affichage 22 des caractéristiques de type du premier équipement domotique et d'une interface de liaison vers une notice d'utilisation associée au type du premier équipement domotique,
- un élément 22, 23, 24, 25 d'activation de l'interface de liaison, notamment d'activation via une action de l'utilisateur,
- un élément 22, 23, 24, 25 de sélection d'une icône représentant un équipement de l'installation,
- un élément 22, 23, 24, 25 d'activation d'un menu d'aide au diagnostic,
- un élément 22 d'affichage d'une notice d'utilisation associée à l'équipement dont l'icône est sélectionnée.

A titre d'exemple nullement limitatif, les éléments matériels et/ou logiciels peuvent comprendre au moins un microcontrôleur ou calculateur.

Bien entendu, de nombreuses modifications peuvent être apportées aux exemples de réalisation décrits précédemment sans sortir du cadre de l'invention.

Dans ce document, les termes « contrôle » et « contrôler » sont ici utilisés comme des synonymes de « commande » et « commander ».

Dans ce document, par « unité de commande centrale », on entend une unité de commande susceptible de commander plusieurs équipements de l'installation, voire plusieurs équipements de types différents de l'installation, voire une majorité d'équipements de l'installation, voire tous les équipements de l'installation.

L'invention permet de simplifier la maintenance de l'installation et/ou de fournir une aide au diagnostic, pour un installateur comme pour un utilisateur de l'installation. En effet, l'invention permet d'obtenir de manière simple et intuitive une notice d'utilisation relative à un équipement particulier de l'installation, cette notice s'affichant directement sur une interface d'un autre équipement de l'installation, notamment un dispositif de contrôle ou de commande de l'installation. De plus, ceci permet de fournir à l'installateur ou à l'utilisateur de manière simple et fiable exactement la notice d'utilisation correspondant à l'équipement domotique particulier concerné.

## Revendications

1. Procédé de commande d'une installation domotique (1) d'un bâtiment, l'installation domotique (1) comprenant une pluralité d'équipements domotiques (3) et de capteurs (4) placés dans des zones de vie à l'intérieur et à l'extérieur du bâtiment et un dispositif de commande (2), le dispositif de commande (2) comprenant un dispositif (21) d'entrée de données et un dispositif (22) d'affichage, le dispositif d'affichage (22) ayant un écran de représentation graphique (10), le dispositif de commande (2) étant configuré pour contrôler le fonctionnement des équipements domotiques (3) par émission d'ordres de commandes de changement d'état et/ou pour communiquer avec les capteurs (4), ledit procédé comprenant les étapes suivantes :
- récupération par le dispositif de commande, d'au moins une information de type associée à un premier équipement domotique installé de la pluralité d'équipements domotiques installés dans l'installation domotique,
- sur demande, notamment sur demande d'un utilisateur, affichage sur le dispositif d'affichage, des caractéristiques de type du premier équipement domotique et d'une interface de liaison vers une notice d'utilisation associée au type du premier équipement domotique,
- sur activation de l'interface de liaison, notamment sur activation via une action de l'utilisateur, affichage sur le dispositif d'affichage, de la notice d'utilisation associée, l'étape de récupération de l'au moins une information de type comprenant une communication de cette information par le premier équipement domotique, le procédé étant **caractérisé**
**en ce que** l'étape d'affichage des caractéristiques de type et de l'interface de liaison fait suite à une sélection du premier équipement domotique et à l'activation d'un menu d'aide au diagnostic, et
**en ce que** le menu d'aide au diagnostic n'est affiché que lorsqu'un équipement domotique ou un type d'équipement domotique est sélectionné.

2. Procédé de commande d'une installation domotique (1) d'un bâtiment selon la revendication 1, **caractérisé en ce que** l'étape de récupération de l'information de type est réalisée au cours d'une phase de mise en place de l'installation domotique.

3. Procédé de commande d'une installation domotique (1) d'un bâtiment selon l'une des revendications précédentes, **caractérisé en ce que** l'étape d'affichage des caractéristiques de type et de l'interface de liaison est mise en œuvre lors de l'activation d'un menu d'aide au diagnostic.

4. Procédé de commande d'une installation domotique (1) d'un bâtiment selon l'une quelconque des revendications précédentes, **caractérisé en ce que** le dispositif de commande est en lien avec une base de données au travers d'un réseau Internet ou d'un réseau local LAN.

5. Procédé de commande d'une installation domotique (1) d'un bâtiment selon l'une quelconque des revendications précédentes, **caractérisé en ce que** la notice d'utilisation comprend des instructions écrites et lisibles par un utilisateur, permettant à l'utilisateur de configurer lui-même le premier équipement domotique ou les liens entre le premier équipement domotique et une unité de commande locale ou un capteur.

6. Procédé de commande d'une installation domotique (1) d'un bâtiment selon l'une des revendications précédentes, **caractérisé en ce que** les caractéristiques de type comprennent un nom commercial et/ou un numéro de version.

7. Procédé de commande d'une installation domotique (1) d'un bâtiment selon l'une des revendications précédentes, **caractérisé en ce que** les caractéristiques de type comprennent une date de version.

8. Dispositif de commande (2) d'une installation domotique (1) d'un bâtiment, ledit dispositif de commande (2) comprenant un dispositif (21) d'entrée de données et un dispositif (22) d'affichage, le dispositif (22) d'affichage ayant un écran de représentation graphique (10) des zones de vie du bâtiment, **caractérisé en ce que** ledit dispositif de commande (2) comprend des éléments (21, 22, 23, 24, 25, 26, 27) matériels et/ou logiciels de mise en œuvre dudit procédé de commande conforme à l'une quelconque des revendications 1 à 7, notamment un élément (23) de sélection d'une première icône (IEQ1, IEQ2, IEQ3, IEQ4, IEQ5, IEQ6) symbolisant un premier équipement domotique, un élément d'activation d'un menu d'aide au diagnostic et un élément (22) d'affichage d'une notice d'utilisation associée à au premier équipement domotique dont l'icône est sélectionnée.

9. Dispositif de commande (2) d'une installation domotique (1) d'un bâtiment selon la revendication précédente, **caractérisé en ce que** ledit dispositif de commande (2) comprend une unité de commande centrale (6), celle-ci comprenant le dispositif (21) d'entrée de données et le dispositif (22) d'affichage.

10. Installation domotique comprenant un dispositif de commande selon l'une des revendications 8 et 9 et plusieurs équipements capables de fournir des informations concernant leur type.

11. Support d'enregistrement de données, lisible par un calculateur, sur lequel est enregistré un programme informatique comprenant des éléments de codes de programme informatique qui, lorsqu'il est exécuté par le calculateur, conduit celui-ci à mettre en oeuvre les étapes du procédé de commande selon l'une des revendications 1 à 7.

12. Programme informatique comprenant un élément de code de programme informatique adapté à la réalisation des étapes du procédé de commande selon l'une des revendications 1 à 7, lorsque le programme tourne sur un ordinateur.

## Patentansprüche

1. Verfahren zur Steuerung einer Heimautomatisierungsanlage (1) eines Gebäudes, wobei die Heimautomatisierungsanlage (1) eine Mehrzahl von Heimautomatisierungseinrichtungen (3) und Sensoren (4), die in Wohnbereichen innerhalb und außerhalb des Gebäudes platziert sind, und eine Steuerungsvorrichtung (2) umfasst, wobei die Steuerungsvorrichtung (2) eine Dateneingabevorrichtung (21) und eine Anzeigevorrichtung (22) umfasst, wobei die Anzeigevorrichtung (22) einen Bildschirm zur grafischen Darstellung (10) aufweist, wobei die Steuerungsvorrichtung (2) dazu ausgebildet ist, den Betrieb der Heimautomatisierungseinrichtungen (3) durch Ausgabe von Zustandsänderungs-Steuerungsbefehlen zu steuern und/oder mit den Sensoren (4) zu kommunizieren, wobei das Verfahren die folgenden Schritte umfasst:
- Abrufen, durch die Steuerungsvorrichtung, mindestens einer Typinformation, die einer ersten installierten Heimautomatisierungseinrichtung der Mehrzahl von Heimautomatisierungseinrichtungen zugeordnet ist, die in der Heimautomatisierungsanlage installiert sind,
- auf Anforderung, insbesondere auf Anforderung eines Benutzers, Anzeigen, auf der Anzeigevorrichtung, der Typmerkmale der ersten Heimautomatisierungseinrichtung und einer Verbindungsschnittstelle zu einer Bedienungsanleitung, die dem Typ der ersten Heimautomatisierungseinrichtung zugeordnet ist,
- bei Aktivierung der Verbindungsschnittstelle, insbesondere bei Aktivierung durch eine Aktion des Benutzers, Anzeigen, auf der Anzeigevorrichtung, der zugeordneten Bedienungsanleitung, wobei der Schritt des Abrufens der mindestens einen Typinformation ein Kommunizieren dieser Information durch die erste Heimautomatisierungseinrichtung umfasst, wobei das Verfahren **dadurch gekennzeichnet ist, dass** der Schritt des Anzeigens der Typmerkmale und der Verbindungsschnittstelle auf eine Auswahl der ersten Heimautomatisierungseinrichtung und die Aktivierung eines Diagnosehilfsmenüs folgt, und dadurch, dass das Diagnosehilfsmenü nur dann angezeigt wird, wenn eine Heimautomatisierungseinrichtung oder ein Heimautomatisierungseinrichtungs-Typ ausgewählt ist.

2. Verfahren zur Steuerung einer Heimautomatisierungsanlage (1) eines Gebäudes nach Anspruch 1, **dadurch gekennzeichnet, dass** der Schritt des Abrufens der Typinformation im Laufe einer Einbauphase der Heimautomatisierungsanlage durchgeführt wird.

3. Verfahren zur Steuerung einer Heimautomatisierungsanlage (1) eines Gebäudes nach einem der vorhergehenden Ansprüche, **dadurch gekennzeichnet, dass** der Schritt des Anzeigens der Typmerkmale und der Verbindungsschnittstelle bei der Aktivierung eines Diagnosehilfsmenüs durchgeführt wird.

4. Verfahren zur Steuerung einer Heimautomatisierungsanlage (1) eines Gebäudes nach einem der vorhergehenden Ansprüche, **dadurch gekennzeichnet, dass** die Steuerungsvorrichtung über ein Internet-Netzwerk oder lokales LAN-Netzwerk mit einer Datenbank in Verbindung steht.

5. Verfahren zur Steuerung einer Heimautomatisierungsanlage (1) eines Gebäudes nach einem der vorhergehenden Ansprüche, **dadurch gekennzeichnet, dass** die Bedienungsanleitung schriftliche und von einem Benutzer lesbare Anweisungen umfasst, die es dem Benutzer gestatten, die erste Heimautomatisierungseinrichtung oder die Verbindungen zwischen der ersten Heimautomatisierungseinrichtung und einer lokalen Steuerungsvorrichtung oder einem Sensor selbst zu konfigurieren.

6. Verfahren zur Steuerung einer Heimautomatisierungsanlage (1) eines Gebäudes nach einem der vorhergehenden Ansprüche, **dadurch gekennzeichnet, dass** die Typmerkmale einen Handelsnamen und/oder eine Versionsnummer umfassen.

7. Verfahren zur Steuerung einer Heimautomatisierungsanlage (1) eines Gebäudes nach einem der vorhergehenden Ansprüche, **dadurch gekennzeichnet, dass** die Typmerkmale ein Versionsdatum umfassen.

8. Steuerungsvorrichtung (2) einer Heimautomatisierungsanlage (1) eines Gebäudes, wobei die Steuerungsvorrichtung (2) eine Dateneingabevorrichtung (21) und eine Anzeigevorrichtung (22) umfasst, wobei die Anzeigevorrichtung (22) einen Bildschirm zur grafischen Darstellung (10) der Wohnbereiche des Gebäudes aufweist, **dadurch gekennzeichnet, dass** die Steuerungsvorrichtung (2) Hardware- und/oder Softwareelemente (21, 22, 23, 24, 25, 26, 27) zur Durchführung des Steuerungsverfahrens nach einem der Ansprüche 1 bis 7 umfasst, insbesondere ein Element (23) zur Auswahl eines ersten Symbols (IEQ1, IEQ2, IEQ3, IEQ4, IEQ5, IEQ6), das eine erste Heimautomatisierungseinrichtung symbolisiert, ein Element zur Aktivierung eines Diagnosehilfsmenüs und ein Element (22) zur Anzeige einer Bedienungsanleitung, die der ersten Heimautomatisierungseinrichtung zugeordnet ist, deren Symbol ausgewählt ist.

9. Steuerungsvorrichtung (2) einer Heimautomatisierungsanlage (1) eines Gebäudes nach dem vorhergehenden Anspruch, **dadurch gekennzeichnet, dass** die Steuerungsvorrichtung (2) eine zentrale Steuereinheit (6) umfasst, wobei diese die Dateneingabevorrichtung (21) und die Anzeigevorrichtung (22) umfasst.

10. Heimautomatisierungsanlage umfassend eine Steuerungsvorrichtung nach einem der Ansprüche 8 und 9 und mehrere Einrichtungen, die imstande sind, Informationen bezüglich ihres Typs bereitzustellen.

11. Datenspeichermedium, das von einer Rechenvorrichtung gelesen werden kann, auf dem ein Computerprogramm gespeichert ist, das Computerprogrammcode-Bestandteile umfasst, das bei Ausführung durch die Rechenvorrichtung diese dazu veranlasst, die Schritte des Verfahrens nach einem der Ansprüche 1 bis 7 durchzuführen.

12. Computerprogramm umfassend einen Computerprogrammcode-Bestandteil, der zur Durchführung der Schritte des Steuerungsverfahrens nach einem der Ansprüche 1 bis 7 geeignet ist, wenn das Programm auf einem Computer läuft.

## Claims

1. Method for controlling a home automation installation (1) of a building, the home automation installation (1) comprising a plurality of home automation appliances (3) and sensors (4) situated in living areas inside and outside the building and a control device (2), the control device (2) comprising a data input device (21) and a display device (22), the display device (22) having a graphic display screen (10), the control device (2) being configured to control the operation of the home automation appliances (3) by transmitting orders to command a change of state and/or to communicate with the sensors (4), said method comprising the following steps:
- the control device retrieving at least one piece of type information associated with a first installed home automation appliance of the plurality of home automation appliances installed in the home automation installation,
- on request, notably on the request of a user, displaying, on the display device, features of the type of the first home automation appliance and an interface for connecting to a user manual associated with the type of the first home automation appliance,
- upon activation of the connection interface, notably upon activation via an action of the user, displaying the associated user manual on the display device,
the step of retrieving the at least one piece of type information comprising the communication of this piece of information by the first home automation appliance, the method being **characterized**
**in that** the step of displaying the type features and the connection interface follows the selection of the first home automation appliance and the activation of a diagnostic help menu, and
**in that** the diagnostic help menu is only displayed when a home automation appliance or a type of home automation appliance is selected.

2. Method for controlling a home automation installation (1) of a building according to Claim 1, **characterized in that** the step of retrieving the piece of type information is performed during a phase of installing the home automation installation.

3. Method for controlling a home automation installation (1) of a building according to either of the preceding claims, **characterized in that** the step of displaying the type features and the connection interface is implemented during the activation of a diagnostic help menu.

4. Method for controlling a home automation installation (1) of a building according to any one of the preceding claims, **characterized in that** the control device is connected to a database through an Internet network or an LAN local network.

5. Method for controlling a home automation installation (1) of a building according to any one of the preceding claims, **characterized in that** the user manual comprises written instructions which can be read by a user, allowing the user to configure the first home automation appliance or the connections between the first home automation appliance and a local control unit or a sensor himself.

6. Method for controlling a home automation installation (1) of a building according to one of the preceding claims, **characterized in that** the type features comprise a trade name and/or a version number.

7. Method for controlling a home automation installation (1) of a building according to one of the preceding claims, **characterized in that** the type features comprise a version date.

8. Device (2) for controlling a home automation installation (1) of a building, said control device (2) comprising a data input device (21) and a display device (22), the display device (22) having a screen (10) for graphically displaying the living areas of the building, **characterized in that** said control device (2) comprises hardware and/or software elements (21, 22, 23, 24, 25, 26, 27) for implementing said control method according to any one of Claims 1 to 7, notably an element (23) for selecting a first icon (IEQ1, IEQ2, IEQ3, IEQ4, IEQ5, IEQ6) symbolizing a first home automation appliance, an element for activating a diagnostic help menu and an element (22) for displaying a user manual associated with the first home automation appliance the icon of which is selected.

9. Device (2) for controlling a home automation installation (1) of a building according to the preceding claim, **characterized in that** said control device (2) comprises a central control unit (6), the latter comprising the data input device (21) and the display device (22).

10. Home automation installation comprising a control device according to either of Claims 8 and 9 and a plurality of appliances capable of providing information relating to their type.

11. Computer-readable data storage medium, on which a computer program is stored comprising computer program code elements which, when it is executed by the computer, leads the latter to implement the steps of the control method according to one of Claims 1 to 7.

12. Computer program comprising a computer program code element suitable for performing the steps of the control method according to one of Claims 1 to 7, when the program runs on a computer.
